# EUROPEAN PATENT SPECIFICATION

(11) **EP 3 546 171 B1**
(45) Date of publication and mention of the grant of the patent: **21.10.2020**
(21) Application number: 19165060.5
(22) Date of filing: 26.03.2019
(51) Int. Cl.: B29C 45/13, B29C 45/16, B29C 45/76

(54) **INJECTION MOLDING MACHINE**
SPRITZGIESSMASCHINE
MACHINE DE MOULAGE À INJECTION

(30) Priority: 30.03.2018 JP 2018068984
(43) Date of publication of application: 02.10.2019
(73) Proprietor: SUMITOMO HEAVY INDUSTRIES, LTD., Tokyo 141-6025 (JP)
(72) Inventor: MATSUMOTO, Daiki, Chiba-shi, Chiba, 263-0001 (JP)
(74) Representative: Walcher, Armin

(56) References cited:
- EP-A1- 3 020 529
- US-A- 5 536 159
- US-A1- 2016 101 559

## Description

### BACKGROUND OF THE INVENTION

### Field of the Invention

Present invention relates to an injection molding machine.

### Description of Related Art

There is known a technology of adding an injection unit to a general-purpose molding machine and obtaining a molding product using a plurality of inj ection units (for example, refer to Japanese Unexamined Patent Publication No. 7-144356).

For example, Japanese Unexamined Patent Publication No. 7-144356 discloses a technology of adding an injection unit to a general-purpose molding machine to perform multi-material/multi-color molding. EP Patent publication 3020529A1 discloses an injection molding machine that integrates a plurality of parts while molding the plurality of parts in order, thereby molding a molding product. US Patent 5536159 A discloses an injection molding machine in which injection units are arranged at any selected surface of a mold to perform an injection molding operation. US Patent publication 2016/101559 A1 discloses an injection molding machine includes first and second injection units.

### SUMMARY OF THE INVENTION

However, there is a possibility that a problem may occur if an operation related to a main molding machine and an operation related to an additional injection unit are simultaneously performed. For example, during a setting operation of a molding condition of the additional injection unit, there is a possibility that an operation of starting a molding operation of the main molding machine is performed. In addition, in a case where, from an operation screen of a display device attached to any one of the main molding machine and the additional injection unit, an operation related to various settings related to the other is possible, if a certain setting operation is simultaneously performed on the operation screens of both display devices, there is a possibility that a content set by one operation may be overwritten by the other operation.

Accordingly, the present invention is made in consideration of the above-de scribed problem, and an object thereof is to provide an injection molding machine capable of preventing the operation related to the main molding machine and the operation related to the additional injection unit from being simultaneously performed.

In order to achieve the object, there is provided an injection molding machine including: a molding machine main body which includes a first injection unit; a second injection unit; a first control unit which controls the molding machine main body; a second control unit which is communicably connected to the first control unit and controls the second injection unit; a first operation unit which is connected to the first control unit and receives an input operation related to at least the molding machine main body from among the molding machine main body and the second injection unit; and a second operation unit which is connected to the second control unit and receives an input operation related to at least the second injection unit from among the molding machine main body and the second injection unit, in which in a case where the first operation unit is operated by a user, the first control unit transmits a first signal indicating that the first operation unit is operated, to the second control unit, and in a case where the second operation unit is operated by the user, the second control unit transmits a second signal indicating that the second operation unit is operated, to the first control unit.

According to the above-de scribed embodiment, it is possible to provide an injection molding machine capable of preventing the operation related to the main molding machine and the operation related to the additional injection unit from being simultaneously performed.

### BRIEF DESCRIPTION OF THE DRAWINGS

Fig. 1A is a side view showing an example (a state when a mold opening is completed) of an injection molding machine.
Fig. 1B is a side view showing an example (a state when the mold is clamped) of the injection molding machine.
Fig. 2 is a plan view showing an example of the injection molding machine.
Fig. 3A is a diagram showing an example of an operation screen.
Fig. 3B is a diagram showing another example of the operation screen.
Fig. 3C is a diagram showing still another example of the operation screen.
Fig. 4 is a diagram showing an example of an operation screen on an additional machine side in a case where an operation is performed on a main machine side.
Fig. 5 is a diagram showing another example of the operation screen on the additional machine side in a case where the operation is performed on the main machine side.
Fig. 6 is a view showing an operation of the injection molding machine according to an embodiment.

### DETAILED DESCRIPTION OF THE INVENTION

Hereinafter, an embodiment of the present invention will be described with reference to the drawings. In each drawing, the same or corresponding reference numerals are assigned to the same or corresponding configurations, and descriptions thereof are omitted.

### [Configuration of Injection Molding Machine]

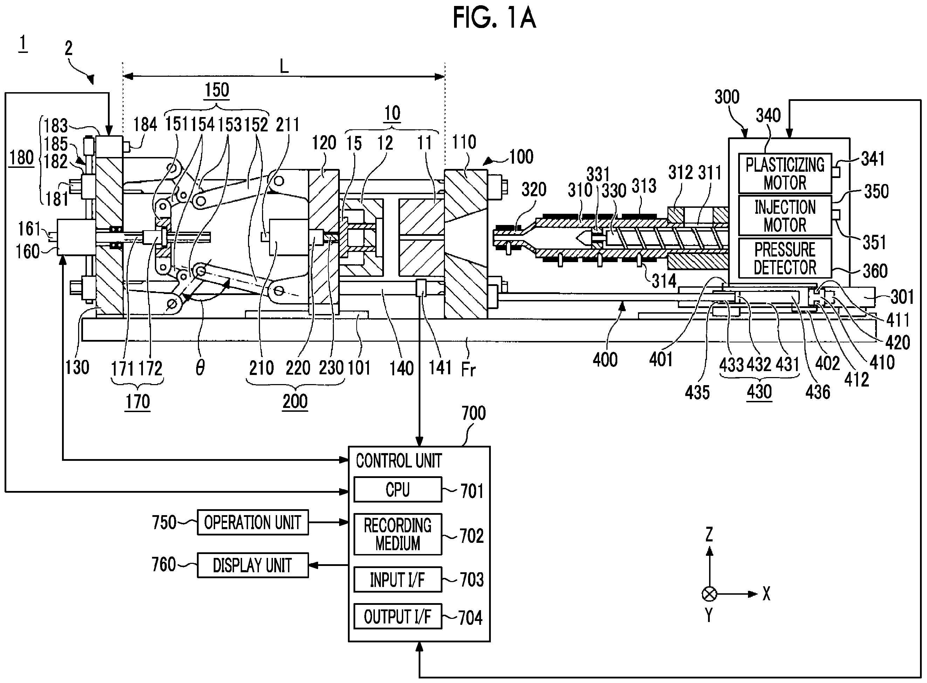

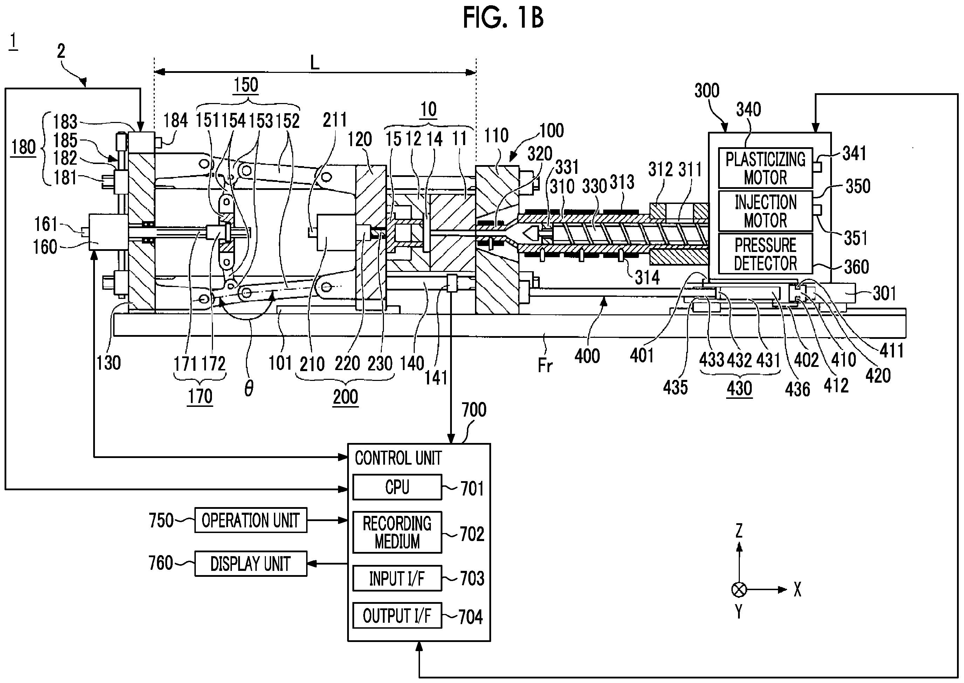

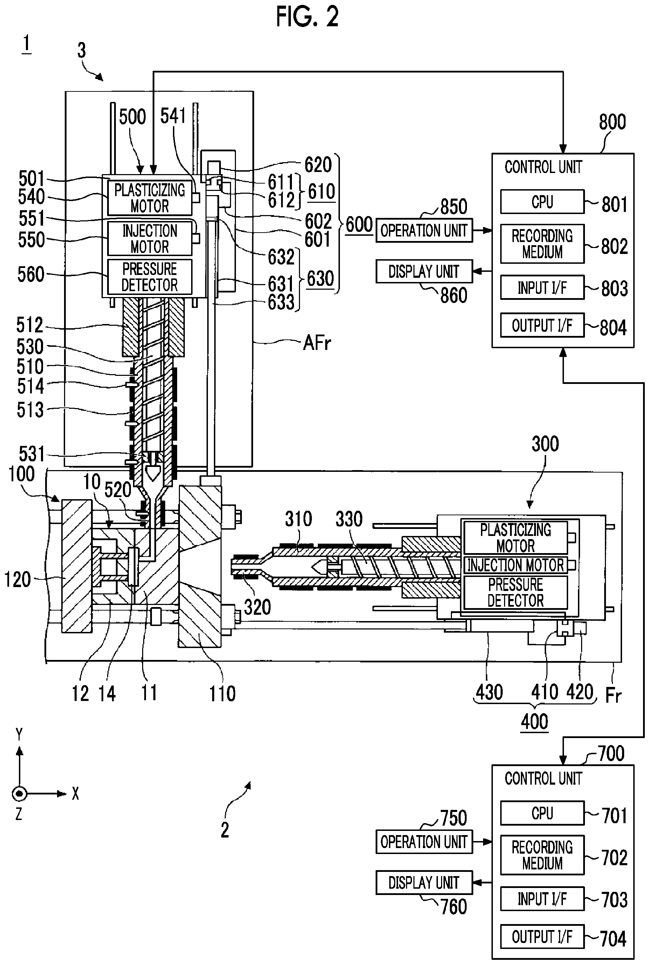

First, a configuration of an injection molding machine according to the present embodiment will be described with reference to Figs. 1A, 1B, and 2.

Figs. 1A, 1B, and 2 are diagrams showing an example (injection molding machine) of the injection molding machine according to the present embodiment. Specifically, Fig. 1A is a side sectional diagram showing a state when a mold opening of the injection molding machine 1 is completed, Fig. 1B is a side sectional diagram showing a state when a mold of the injection molding machine 1 is clamped, and Fig. 2 is a plan sectional view showing a state when the mold of the injection molding machine 1 is clamped. Fig. 2 is a plan sectional view showing the state when the mold of the injection molding machine 1 is clamped. Hereinafter, in the drawings of the present embodiment, an X axis, a Y axis, and a Z axis are perpendicular to each other, positive/negative directions (hereinafter, simply referred to as an "X direction") of the X axis and positive/negative directions (hereinafter, simply referred to as a "Y direction") of the Y axis indicate a horizontal direction, and positive/negative directions (hereinafter, simply referred to as a "Z direction") of the Z axis indicate a vertical direction.

In addition, in Figs. 1A, 1B, and 2, as described below, a stationary mold 11 in a case where a multi-color molding product is molded is shown. Specifically, the stationary mold 11 in a case where a cavity space 14 is filled with a molding material from a first injection unit 300 is shown in Figs. 1A and 1B, and the stationary mold 11 in a case where a cavity space is filled with a molding material from a second injection unit 500 is shown in Fig. 2.

The injection molding machine 1 includes a main machine 2 and an additional machine 3.

The main machine 2 (an example of a molding machine main body) includes a mold clamping unit 100, an ejector unit 200, a first injection unit 300, a first movement unit, 400, and a first control unit 700. In addition, the additional machine 3 includes a second injection unit 500, a second movement unit 600, and a second control unit 800.

### <Mold Clamping Unit>

Hereinafter, in descriptions of the mold clamping unit 100, a movement direction (right direction in Figs. 1A and 1B) of a movable platen 120 when a mold is closed is defined as a front side, and a movement direction (left direction in Figs. 1A and 1B) of the movable platen 120 when the mold is opened is defined as a rear side.

The mold clamping unit 100 performs closing, clamping, and opening on a mold unit 10. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to a frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, closing, clamping, and opening of the mold are performed. The mold unit 10 includes the stationary mold 11 and the movable mold 12.

The toggle support 130 is connected with a gap from the stationary platen 110, and is placed on the frame Fr to be movable in mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the first control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1A and 1B. For example, in Figs. 1A and 1B, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the first control unit 700.

In the mold closing process, the mold clamping motor 160 is driven to move the crosshead 151 forward to a mold closing completion position at a set speed. Accordingly, the movable platen 120 moves forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the first control unit 700.

In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by any one of the first injection unit 300 and the second injection unit 500. A filled molding material is solidified, and thus, a molding product can be obtained. A plurality of cavity spaces 14 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, the speed or positions (including mold closing start position, speed switching position, mold closing completion position, and mold clamping position) of the crosshead 151 and the mold clamping force in the mold closing process and the mold clamping process are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

In addition, setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by an exchange of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other.

In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130.

In addition, the rotation transmission portion 185 may include a belt, a pulley, or the like instead of the gear.

An operation of the mold space adjustment mechanism 180 is controlled by the first control unit 700. The first control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the first control unit 700. The detection result of the mold space adjustment motor encoder 184 is used to monitor or control the position of the toggle support 130 or the gap L.

In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are an upward-downward direction.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### <Ejector Unit>

Similarly to the descriptions of the mold clamping unit 100, in descriptions of the ejector unit 200, the movement direction (right direction in Figs. 1A and 1B) of the movable platen 120 when the mold is closed is defined as the front side, and the movement direction (left direction in Figs. 1A and 1B) of the movable platen 120 when the mold is opened is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 15 which is disposed to be movable forward or rearward inside the movable mold 12. The front end portion of the ejector rod 230 maybe connected to the movable member 15 or may not be connected to the movable member 15.

The ejector unit 200 performs an ejection process under the control of the first control unit 700.

In the ejection process, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the first control unit 700.

In addition, an ejector rod position detector which detects the position of the ejector rod 230 and an ejector rod speed detector which detects the speed of the ejector rod 230 are not limited to the ejector motor encoder 211, and a general detector can be used.

### <First Injection Unit>

Hereinafter, in descriptions of the first injection unit 300, a direction (left direction Figs. 1A and 1B) in which the first injection unit 300 approaches the mold unit 10 is referred to as a front side, and a direction (right direction Figs. 1A and 1B) in which the first injection unit 300 is separated from the mold unit 10 is referred to as a rear side.

The first injection unit 300 is installed on a slide base 301 which is movable forward or rearward with respect to the frame Fr, and is movable forward or rearward with respect to the mold unit 10. The first injection unit 300 comes into contact with the mold unit 10, and the cavity space 14 inside the mold unit 10 is filled with the molding material by the first injection unit 300. For example, the first injection unit 300 includes a cylinder 310, a nozzle 320, a screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (a right-left direction in Figs. 1A and 1B) of the cylinder 310. The heating unit 313 and the temperature detector 314 are provided in each zone. The first control unit 700 controls the heating unit 313 such that a detection temperature of the temperature detector 314 becomes a set temperature for each zone.

The nozzle 320 is provided on the front end portion of the cylinder 310 and presses the mold unit 10. The heating unit 313 and the temperature detector 314 are provided on an outer periphery of the nozzle 320. The first control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 10 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 1B) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1A) at which the flow path of the molding material is open. Accordingly, the molding material is fed to the front side of the screw 330.

The backflow prevention ring 331 maybe either a co-rotation type ring which rotates together with the screw 330 or a non-co-rotation type ring which does not rotate together with the screw 330.

In addition, the first injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the first control unit 700. The pressure detector 360 is provided on a transmission path of the force between the injection motor 350 and the screw 330 and detects the force applied to the pressure detector 360.

The pressure detector 360 sends a signal indicating a detection result to the first control unit 700. The detection result of the pressure detector 360 is used to control or monitor a pressure received by the screw 330 from the molding material, a back pressure with respect to the screw 330, a pressure applied from the screw 330 to the molding material, or the like.

The first injection unit 300 performs a plasticizing process, a filling process, a holding pressure process, or the like under the control of the first control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the first control unit 700.

In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the first control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the first control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends a signal indicating a detection result to the first control unit 700. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by a solidified molding material. This state is referred to a gate seal and a backflow of the molding material from the cavity space 14 is prevented. A cooling process starts after the holding pressure process . In the cooling process, solidification of the molding material in the cavity space 14 is performed. In order to shorten a molding cycle time, the plasticizing process may be performed during the cooling process.

In addition, the first injection unit 300 of the present embodiment is an inline and screw type injection unit. However, the first injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

Moreover, the first injection unit 300 of the present embodiment is a horizontal type injection unit in which the axial direction of the cylinder 310 is the horizontal direction. However, the first injection unit 300 may be a vertical type injection unit in which the axial direction of the cylinder 310 is the upward-downward direction. The mold clamping unit combined with the vertical type first injection unit 300 may be a vertical type mold clamping unit or a horizontal type mold injection unit. Similarly, the mold clamping unit combined with the horizontal type first injection unit 300 may be a horizontal type mold clamping unit or a vertical type mold clamping unit.

### <First Movement Unit>

Similarly to the descriptions of the first injection unit 300, hereinafter, in descriptions of the first movement unit 400, a direction (left direction in Figs. 1A and 1B) in which the first injection unit 300 approaches the mold unit 10 is referred to a front side and a direction (right direction in Figs. 1A and 1B) in which the first injection unit 300 is separated from the mold unit 10 is referred to as a rear side.

In addition, in Fig. 2, the first movement unit 400 is disposed on one side of the cylinder 310 of the first injection unit 300. However, the first movement units 400 may be disposed on both sides of the cylinder 310 or may be symmetrically disposed with respect to the cylinder 310.

The first movement unit 400 moves the first injection unit 300 forward or rearward with respect to the mold unit 10. In addition, the first movement unit 400 presses the nozzle 320 to the mold unit 10 to generate a nozzle touch pressure. The first movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the first control unit 700 and by the rotation torque corresponding to the control signal from the first control unit 700. The motor 420 may be an electric motor or an electric servo motor.

The hydraulic cylinder 430 includes a cylinder body 431, a piston 432, and a piston rod 433. The cylinder body 431 is fixed to the first injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the first injection unit 300 is pushed forward. The first injection unit 300 moves forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the first injection unit 300 is pushed rearward. The first injection unit 300 moves rearward and thus, the nozzle 320 is separated from the stationary mold 11.

In addition, in the present embodiment, the first movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the first injection unit 300 may be used.

### <First Control Unit>

The first control unit 700 directly transmits the control signal to the mold clamping unit 100, the ejector unit 200, the first injection unit 300, the first movement unit 400, or the like to control driving of the main machine 2. Moreover, the first control unit 700 transmits the control signal to the second control unit 800, and thus, indirectly controls driving of the additional machine 3 including the second injection unit 500, the second movement unit 600, or the like. That is, the first control unit 700 controls the mold clamping unit 100, the ejector unit 200, the first injection unit 300, the first movement unit 400, and the second control unit 800, and thus, controls driving of the entire injection molding machine 1.

For example, the first control unit 700 includes a computer, and the first control unit 700 includes a Central Processing Unit (CPU) 701, a recording medium 702 such as a memory, an input interface 703, and an output interface 704. The first control unit 700 performs various controls by causing the CPU 701 to execute a program stored in the recording medium 702. In addition, the first control unit 700 receives a signal from the outside through the input interface 703 and transmits a signal to the outside through the output interface 704.

The first control unit 700 repeatedly performs the mold closing process, the mold clamping process, the mold opening process, or the like to repeatedly manufacture the molding product. In addition, the first control unit 700 performs the plasticizing process, the filling process, the holding pressure process, or the like by the first injection unit 300 between the mold clamping processes. In addition, the first control unit 700 transmits the control signal to the second control unit 800, and thus, the second control unit 800 performs the plasticizing process, the filling process, the holding pressure process, or the like by the second injection unit 500 described later between the mold clamping processes. A series of operations to obtain the molding product, for example, an operation from the start of the plasticizing process to the start of the next plasticizing process by the first injection unit 300 is also referred to as a "shot" or a "molding cycle". In addition, a time required for once shot is also referred to as a "molding cycle time".

For example, the once molding cycle includes the plasticizing process, the mold closing process, and the mold clamping process by the first injection unit 300 and the second injection unit 500, the filling process by the first injection unit 300 and the second injection unit 500, and the holding pressure process, the cooling process, the mold opening process, and the ejection process by the first injection unit 300 and the second injection unit 500 in this order. Here, this order is an order of the start of each process. The filling process, the holding pressure process, and the cooling process are performed between the start of the mold clamping process to the end of the mold clamping process . The end of the mold clamping process coincides with the start of the mold opening process.

In addition, in order to shorten the molding cycle time, the plurality of processes may be simultaneously performed. For example, the plasticizing process may be performed during the cooling process of the previous molding cycle, and in this case, the mold closing process may be performed at an initial stage of the molding cycle. In addition, the filling process may start during the mold closing process. Moreover, the ejection process may be started during the mold opening process. In a case where an on/off valve for opening or closing flow paths of the nozzle 320 of the first injection unit 300 and a nozzle 520 described later of the second injection unit 500 is provided, the mold opening process may be started during the plasticizing process. Accordingly, even when the mold opening process is started during the plasticizing process, the molding material does not leak from the nozzle 320 and the nozzle 520 if the on/off valve closes the flow paths of the nozzle 320 and the nozzle 520.

The first control unit 700 is connected to an operation unit 750 or a display unit 760.

The operation unit 750 (an example of a first operation unit) receives an input operation related to the main machine 2 by a user and outputs a signal corresponding to the input operation to the first control unit 700. In addition, the operation unit 750 receives an input operation related to the additional machine 3 by the user and outputs a signal corresponding to the input operation to the first control unit 700.

The display unit 760 (an example of the first display unit) displays an operation screen corresponding to the input operation in the operation unit 750 under the control of the first control unit 700. Specifically, the display unit 760 displays an operation screen related to the main machine 2 under the control of the first control unit 700. In addition, the display unit 760 may display the operation screen related to the additional machine 3 under the control of the first control unit 700. Accordingly, the user can perform the operation related to the additional machine 3 on the main machine 2 side. Therefore, convenience of the user is improved, and it is possible to easily perform the setting operation or the like of the entire injection molding machine 1 including the main machine 2 and the additional machine 3.

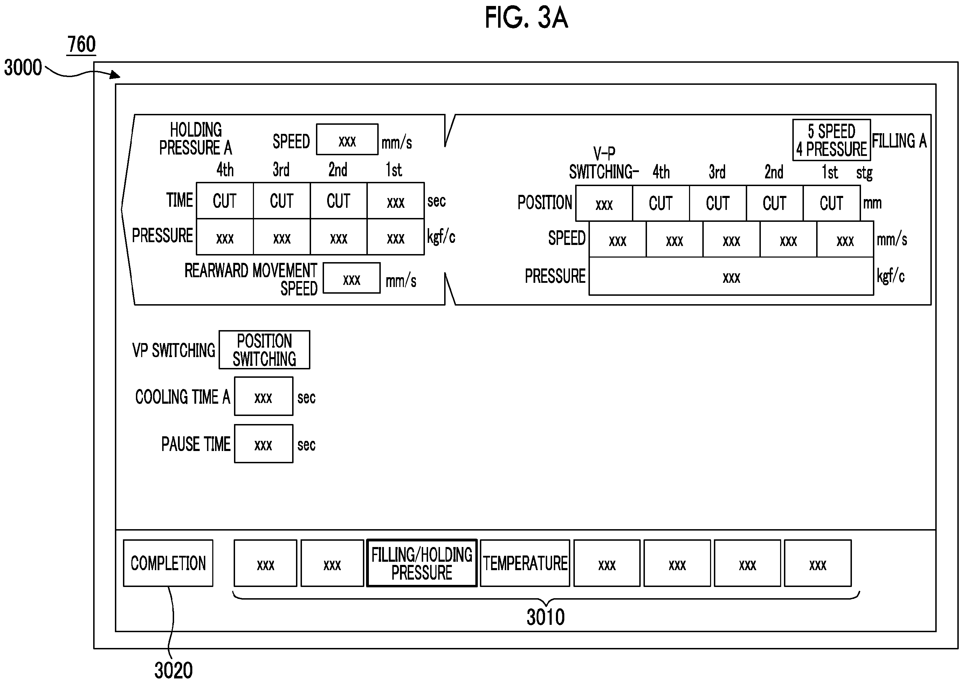

The operation screen displayed on the display unit 760 is used for setting or the like related to the main machine 2 or the additional machine 3. For example, the setting related to the main machine 2 or the additional machine 3 includes setting (specifically, input of a set value) of a molding condition related to the main machine 2 or the additional machine 3. In addition, for example, the setting includes setting related to a selection of a type of detection value of various sensors or the like related to the main machine 2 or the additional machine 3 recorded as logging data during a molding operation. Inaddition, for example, the setting includes a display specification (for example, a type of the actual value to be displayed or a display method) on the display unit 760 of the detection value (an actual value) of various sensors or the like related to the main machine 2 or the additional machine 3 during the molding operation. A plurality of operation screens are prepared and are switched to the display unit 760 to be displayed or are displayed in an overlapping manner. The user operates the operation unit 750 while viewing the operation screen displayed on the display unit 760, and thus, can perform the setting (including the input of the set value) or the like related to the main machine 2. In addition, in a case where the operation screen related to the additional machine 3 is displayed on the display unit 760, the user operates the operation unit 750 while viewing the operation screen displayed on the display unit 760, and thus, can perform the setting or the like of the additional machine 3. Details of the operation screen displayed on the display unit 760 will be described later (see Figs. 3A to 3C, Fig. 4, and Fig. 5).

In addition, the display unit 760 displays various information (information screen) corresponding to the operation on the operation screen under the control of the first control unit 700. A plurality of information screens are prepared, and are switched to the display unit 760 to be displayed or are displayed in an overlapping manner. For example, the display unit 760 displays a setting content (for example, a setting content related to the molding condition of the main machine 2) or management information (for example, information about operation results of the main machine 2 or the like) related to the main machine 2. Moreover, the display unit 760 displays a setting content (for example, a setting content related to the molding condition of the additional machine 3) or management information (for example, information related to an operation result of the additional machine 3) related to the additional machine 3, under the control of the first control unit 700. In this case, the setting content related to the additional machine 3 displayed on the display unit 760 may be reference information of the operation screen related to the setting of the additional machine 3. As a result, the user can perform the setting related to the main machine 2 so as to correspond to the setting content related to the additional machine 3 while confirming the setting content related to the additional machine 3. In addition, the user can confirm both management information related to the main machine 2 and the additional machine 3 on the main machine 2 side, and thus, it is possible to easily determine a quality control or the like of the entire injection molding machine 1. Thus, the convenience of the user is improved. In this case, various information (the setting content or the management information related to the additional machine 3) related to the additional machine 3 displayed on the display unit 760 may have the same configuration as the information related to the main machine 2 or a configuration different from the information. For example, the various information related to the additional machine 3 displayed on the display unit 760 may be summary information of a predetermined method, or may be constituted by only information selected and set by a predetermined operation screen or the like in advance. Accordingly, the user can display only necessary information on the display unit 760. In addition, in the information screen corresponding to various information related to the additional machine 3 displayed on the display unit 760, the user can select or change a display order or a size of a frame such as a window by the operation unit 750 through a predetermined operation screen or the like. As a result, the user can customize a display specification of the information screen displayed on the display unit 760 according to his/her preference, and thus, the convenience of the user is improved. In addition, the various information related to the additional machine 3 may be displayed on the display unit 760 as a pair of pieces of information along with corresponding information related to the main machine 2. As a result, for example, the user can perform the setting operation of the molding condition of the main machine 2 while confirming the setting content of the molding condition of the additional machine 3, and thus, the convenience of the user is improved.

For example, the operation unit 750 and the display unit 760 may be constituted by a touch panel type display and may be integrated with each other.

In addition, in the present embodiment, the operation unit 750 and the display unit 760 are integrated with each other. However, the operation unit 750 and the display unit 760 may be provided independently. In addition, a plurality of the operation units 750 may be provided.

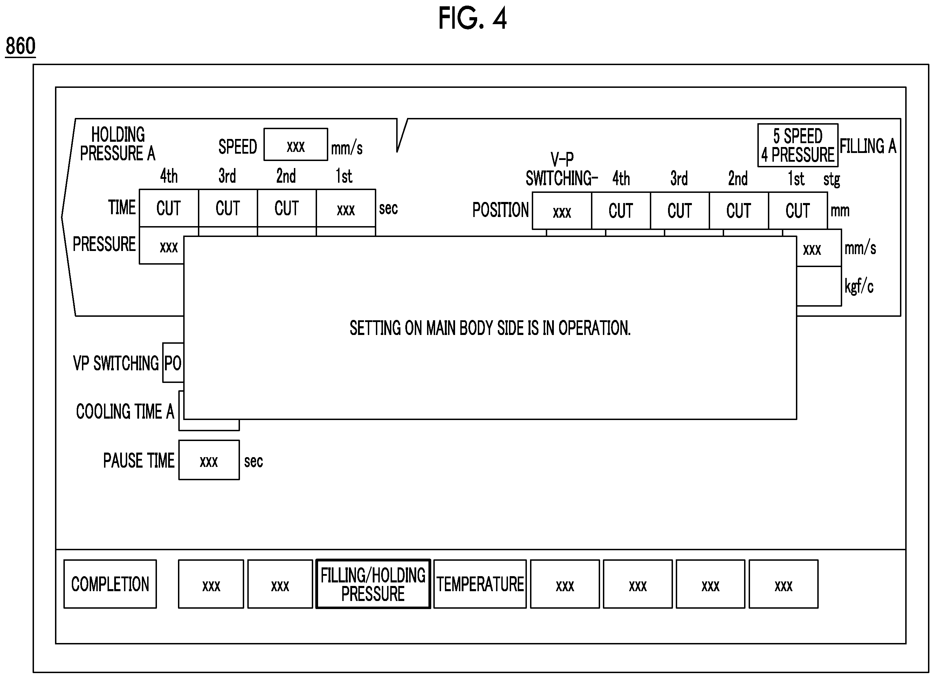

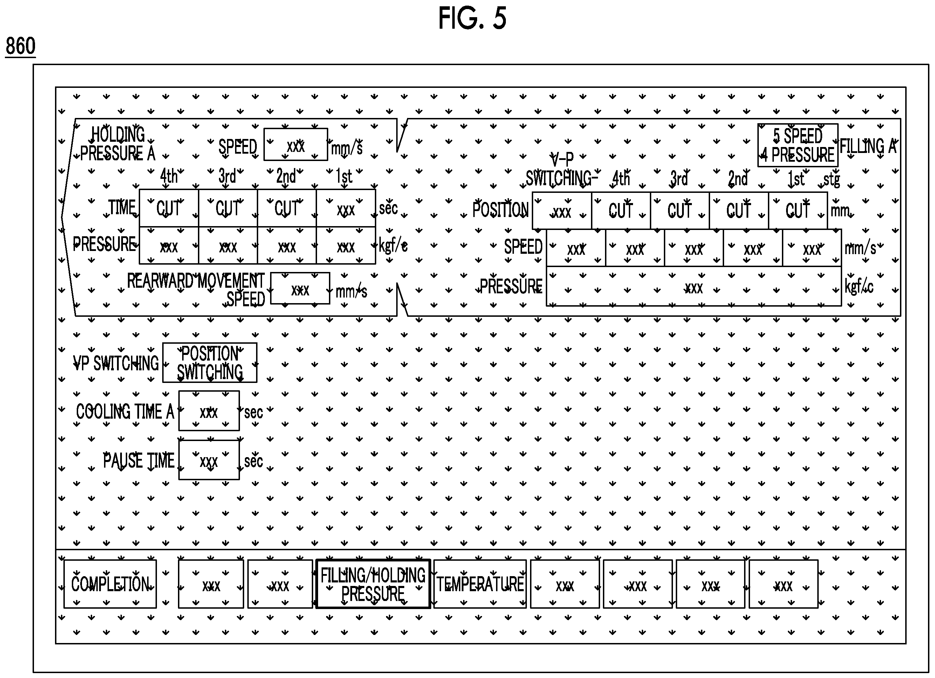

In a case where the operation of the operation unit 750 is performed, the first control unit 700 transmits a signal (an example of a first signal; hereinafter, referred to as a "signal during operating the main machine") indicating that the operation is performed on the main machine 2 side, to the second control unit 800. As a result, the first control unit 700 can prompt the second control unit 800 such that the second control unit 800 does not accept the operation (that is, the operation of the operation unit 850) on the additional machine 3 side. Therefore, for example, it is assumed that even when the setting is operated on one side, the operation for starting the molding operation is performed on the other side if operations are simultaneously performed on the main machine 2 side and the additional machine 3 side. However, in the present embodiment, the first control unit 700 is in cooperation with the second control unit 800, and thus, it is possible to prevent the operation from being simultaneously performed on the main machine 2 side and the additional machine 3 side. Details of this function (hereinafter, referred to as a "simultaneous operation suppression function") of the first control unit 700 will be described later (refer to Fig. 4 and Fig. 5).

In addition, the first control unit 700 prohibits the molding operation performed by the injection molding machine 1 including the main machine 2 and the additional machine 3 unless the settings of the molding conditions of both the main machine 2 and the additional machine 3 are completed. As a result, even when an initial set value is input to the set value as the molding condition in advance and the setting related to the molding condition is in the middle, there is a possibility that the molding operation is started according to the predetermined operation on the main machine 2 side. Accordingly, the first control unit 700 can prevent the molding operation from being started in a state where the setting related to the molding condition is incomplete.

For example, as will be described later (refer to Figs. 3A to 3C), the first control unit 700 determines whether or not the molding condition related to the main machine 2 is completed according to whether or not an operation target (completion button), which is provided on the operation screen related to the setting of the molding condition and notifies that the setting of the molding condition related to the main machine 2 is completed, is operated. In addition, in a case where after the operation screen related to the setting of the molding condition of the main machine 2 is displayed, a predetermined time or more sufficiently longer than a time necessary for setting the molding condition elapses, the first control unit 700 may determine that the setting of the molding condition related to the main machine 2 is completed. Moreover, in a case where after the operation screen related to the setting of the molding condition of the main machine 2 is displayed, a non-operation state is maintained for a predetermined time or more, the first control unit 700 may determine that the setting of the molding condition related to the main machine 2 is completed. Moreover, in a case where the operation screen related to the setting of the additional machine 3 is displayed on the display unit 760, according to a method similar to the above-described method of determining whether or not the setting of the molding condition related to the main machine 2 is completed, the first control unit 700 may determine whether or not the setting of the molding condition related to the additional machine 3 is completed.

### <Second Injection Unit>

Hereinafter, in descriptions of the second injection unit 500, a direction (a downward direction Fig. 2) in which the second injection unit 500 approaches the mold unit 10 is referred to as a front side, and a direction (an upward direction Fig. 2) in which the second injection unit 500 is separated from the mold unit 10 is referred to as a rear side.

Moreover, a movement direction of the first injection unit 300 is the X direction and a movement direction of the second injection unit 500 is the Y direction. However, the movement directions are not particularly limited. For example, the movement direction of any one of the first injection unit 300 of the second injection unit 500 may be the Z direction.

The second injection unit 500 is installed on a slide base 501 which is movable forward or rearward with respect to an additional frame AFr provided to be adjacent to the frame Fr, and is movable forward or rearward with respect to the mold unit 10. The second injection unit 500 comes into contact with the mold unit 10, and the cavity space 14 inside the mold unit 10 is filled with the molding material by the second injection unit 500.

For example, the mold unit 10 may have two different stationary molds 11 movable by a known slide mechanism, a turntable mechanism, or the like, and the two stationary molds 11 may form mutually different cavity spaces 14 with the movable molds 12 (refer to Figs. 1B and 2). That is, in the second injection unit 500, a molding material different from that of the first injection unit 300 may fill the cavity space 14 formed of the movable mold 12 including a primary molding product acquired in the cavity space 14 corresponding to one stationary mold 11 by the first injection unit 300 and the other stationary mold 11, and thus, a multi-color molding product integrated with the primary molding product may be formed. In addition, the stationary mold 11 of the mold unit 10 may have a first path through which the molding material flows from the first injection unit 300 to the cavity space 14 and a second path through which the molding material flows from the second injection unit 500 to the cavity space 14. In this case, in the second injection unit 500, an aspect may be adopted in which the cavity space 14 is filled with the molding material while the cavity space 14 is filled with the molding material by the first injection unit 300 or an aspect may be adopted in which the cavity space 14 is filled with the molding material when the cavity space 14 is not filled with the molding material by the first injection unit 300.

For example, the second injection unit 500 includes a cylinder 510, a nozzle 520, a screw 530, a plasticizing motor 540, an injection motor 550, a pressure detector 560, or the like.

The cylinder 510 heats the molding material which is supplied from a supply port to the inner portion of the cylinder 510. Similarly to the case of the first injection unit 300, for example, the molding material includes a resin or the like. For example, the molding material is formed into pellets and is supplied to a supply port 511 in a solid state. The supply port is formed on a rear portion of the cylinder 510. A cooler 512 such as a water cooling cylinder is provided on an outer periphery of the rear portion of the cylinder 510. A heating unit 513 such as a band heater and a temperature detector 514 are provided on an outer periphery of the cylinder 510 on a front side of the cooler 512.

The cylinder 510 is divided into a plurality of zones in an axial direction (upward-downward direction in Fig. 2) of the cylinder 510. The heating unit 513 and the temperature detector 514 are provided in each zone. The second control unit 800 controls the heating unit 513 such that a detection temperature of the temperature detector 514 becomes a set temperature for each zone.

The nozzle 520 is provided on the front end portion of the cylinder 510 and presses the mold unit 10. The heating unit 513 and the temperature detector 514 are provided on an outer periphery of the nozzle 520. The second control unit 800 controls the heating unit 513 such that a detection temperature of the nozzle 520 becomes a set temperature.

The screw 530 is disposed in the cylinder 510 so as to be rotatable and movable forward or rearward. If the screw 530 rotates, the molding material is fed forward along spiral grooves of the screw 530. The molding material is gradually melted by heat from the cylinder 510 while being fed forward. The liquid molding material is fed to a front portion of the screw 530 and is accumulated in the front portion of the cylinder 510, and thus, the screw 530 moves rearward. Thereafter, if the screw 530 moves forward, the liquid molding material accumulated in front of the screw 530 is injected from the nozzle 520 and the inside of the mold unit 10 is filled with the liquid molding material.

A backflow prevention ring 531 is attached to a front portion of the screw 530 to be movable forward or rearward as a backflow prevention valve which prevents backflow of the molding material from the front side of the screw 530 toward the rear side when the screw 530 is pushed forward.

When the screw 530 moves forward, the backflow prevention ring 531 is pushed toward the rear side by the pressure of the molding material in front of the screw 530 and moves rearward relatively to the screw 530 to a close position (refer to Figs. 3A to 3C) at which a flow path of the molding material is closed. Accordingly, the molding material accumulated in front of the screw 530 is prevented from flowing toward the rear side.

Meanwhile, when the screw 530 rotates, the backflow prevention ring 531 is pushed toward the front side by the pressure of the molding material fed forward along the spiral grooves of the screw 530 and moves forward relatively to the screw 530 to an open position at which the flow path of the molding material is open. Accordingly, the molding material is fed to the front side of the screw 530.

The backflow prevention ring 531 may be either a co-rotation type ring which rotates together with the screw 530 or a non-co-rotation type ring which does not rotate together with the screw 530.

In addition, the second injection unit 500 may include a drive source which moves the backflow prevention ring 531 forward or rearward with respect to the screw 530 between the open position and the close position.

The plasticizing motor 540 rotates the screw 530. A drive source which rotates the screw 530 is not limited to the plasticizing motor 540 and may be a hydraulic pump or the like, for example.

The injection motor 550 moves the screw 530 forward or rearward. A motion conversion mechanism or the like which converts a rotary motion of the injection motor 550 into a linear motion of the screw 530 is provided between the injection motor 550 and the screw 530. For example, the motion conversion mechanism includes a screw shaft and a screw nut which is screwed to the screw shaft. A ball, a roller, or the like may be provided between the screw shaft and the screw nut. A drive source which moves the screw 530 forward or rearward is not limited to the injection motor 550 and may be a hydraulic cylinder, for example.

The pressure detector 560 detects a force transmitted between the injection motor 550 and the screw 530. The detected force is converted into a pressure by the second control unit 800. The pressure detector 560 is provided on a transmission path of the force between the injection motor 550 and the screw 530 and detects the force applied to the pressure detector 560.

The pressure detector 560 sends a signal indicating a detection result to the second control unit 800. The detection result of the pressure detector 560 is used to control or monitor a pressure received by the screw 530 from the molding material, a back pressure with respect to the screw 530, a pressure applied from the screw 530 to the molding material, or the like.

The second injection unit 500 performs a plasticizing process, a filling process, a holding pressure process, or the like under the control of the second control unit 800.

In the plasticizing process, the plasticizing motor 540 is driven to rotate the screw 530 at a set rotational speed and the molding material is fed forward along the spiral grooves of the screw 530 by the screw 530. According to this, the molding material is gradually melted. The screw 530 moves rearward as the liquid molding material is fed to the front side of the screw 530 and is accumulated in front of the cylinder 510. For example, the rotational speed of the screw 530 is detected using a plasticizing motor encoder 541. The plasticizing motor encoder 541 detects the rotation of the plasticizing motor 540 and sends a signal indicating a detection result to the second control unit 800.

In addition, a screw rotational speed detector which detects the rotational speed of the screw 530 is not limited to the plasticizing motor encoder 541, and a general detector may be used.

In the plasticizing process, in order to restrict an abrupt rearward movement of the screw 530, the injection motor 550 may be driven so as to apply a set back pressure to the screw 530. For example, the back pressure with respect to the screw 530 is detected using the pressure detector 560. The pressure detector 560 sends a signal indicating a detection result to the first control unit 700. If the screw 530 moves rearward to a plasticizing completion position and a predetermined amount of the molding materials is accumulated in front of the screw 530, the plasticizing process is completed.

In the filling process, the injection motor 550 is driven to move the screw 530 forward at a set speed, and the cavity space 14 inside the mold unit 10 is filled with the liquid molding material accumulated in front of the screw 530. For example, a position or speed of the screw 530 is detected using an injection motor encoder 551. The injection motor encoder 551 detects the rotation of the injection motor 550 and sends a signal indicating a detection result to the second control unit 800. If the position of the screw 530 reaches a set position, switching (so called V/P switching) from the filling process to the holding pressure process is performed. The position at which the V/P switching is performed is also referred to a V/P switching position. The set speed of the screw 530 may be changed according to the position of the screw 530, the time, or the like.

In addition, in the filling process, after the position of the screw 530 reaches the set position, the screw 530 may be temporarily stopped at the set position, and thereafter, the V/P switching may be performed. Immediately before the V/P switching, instead of the screw 530 being stopped, the screw 530 may move forward or may move rearward at a very slow speed. Moreover, a screw position detector which detects the position of the screw 530 and a screw movement speed detector which detects the movement speed of the screw 530 are not limited to the injection motor encoder 551, and a general detector can be used.

In the holding pressure process, the injection motor 550 is driven to push the screw 530 forward, a pressure (hereinafter, also referred to as a "holding pressure") of the molding material on a front end portion of the screw 530 is held at a set pressure, and the molding material remaining inside the cylinder 510 is pressed toward the mold unit 10. Insufficient molding materials can be replenished by cooling shrinkage in the mold unit 10. For example, the holding pressure is detected using the pressure detector 560. The pressure detector 560 sends a signal indicating a detection result to the second control unit 800. A set value of the holding pressure may be changed according to an elapsed time from the starting of the holding pressure process, or the like.

In the holding pressure process, the molding material inside the cavity space 14 in the mold unit 10 is gradually cooled, and when the holding pressure process is completed, an inlet of the cavity space 14 is closed by a solidified molding material. This state is referred to a gate seal and a backflow of the molding material from the cavity space 14 is prevented. A cooling process starts after the holding pressure process . In the cooling process, solidification of the molding material in the cavity space 14 is performed. In order to shorten a molding cycle time, the plasticizing process may be performed during the cooling process.

In addition, the second injection unit 500 of the present embodiment is an inline and screw type injection unit. However, the second injection unit 500 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

Moreover, the second injection unit 500 of the present embodiment is a horizontal type injection unit in which the axial direction of the cylinder 510 is the horizontal direction. However, the second injection unit 500 may be a vertical type injection unit in which the axial direction of the cylinder 510 is the upward-downward direction. The mold clamping unit combined with the vertical type second injection unit 500 may be a vertical type mold clamping unit or a horizontal type mold injection unit. Similarly, the mold clamping unit combined with the horizontal type second injection unit 500 may be a horizontal type mold clamping unit or a vertical type mold clamping unit.

### <Second Movement Unit>

Similarly to the descriptions of the second injection unit 500, hereinafter, in descriptions of the second movement unit 600, a direction (down direction in Fig. 2) in which the second injection unit 500 approaches the mold unit 10 is referred to a front side and a direction (upward direction in Fig. 2) in which the second injection unit 500 is separated from the mold unit 10 is referred to as a rear side.

In addition, in Fig. 2, the second movement unit 600 is disposed on one side of the cylinder 510 of the second injection unit 500. However, the second movement units 600 may be disposed on both sides of the cylinder 510 or may be symmetrically disposed with respect to the cylinder 510.

The second movement unit 600 moves the second injection unit 500 forward or rearward with respect to the mold unit 10. In addition, the second movement unit 600 presses the nozzle 520 to the mold unit 10 to generate a nozzle touch pressure. The second movement unit 600 includes a hydraulic pump 610, a motor 620 which is a drive source, a hydraulic cylinder 630 which is a hydraulic actuator, or the like.

The hydraulic pump 610 includes a first port 611 and a second port 612. The hydraulic pump 610 is a pump which can rotate in both directions and switches a rotation direction of the motor 620. Accordingly, a working liquid (for example, oil) is sucked from any one of first port 611 and the second port 612 and is discharged from the other, and thus, a liquid pressure is generated. In addition, the hydraulic pump 610 sucks the working liquid from a tank and can discharge the working liquid from any one of the first port 611 and the second port 612.

The motor 620 operates the hydraulic pump 610. The motor 620 drives the hydraulic pump 610 in the rotation direction corresponding to a control signal from the second control unit 800 and by the rotation torque corresponding to the control signal from the second control unit 800. The motor 620 may be an electric motor or an electric servo motor.

The hydraulic cylinder 630 includes a cylinder body 631, a piston 632, and a piston rod 633. The cylinder body 631 is fixed to the second injection unit 500. The piston 632 divides the inside of the cylinder body 631 into a front chamber which is a first chamber and a rear chamber which is a second chamber. The piston rod 633 is fixed to the stationary platen 110.

The front chamber of the hydraulic cylinder 630 is connected to the first port 611 of the hydraulic pump 610 via a first flow path 601. The working liquid discharged from the first port 611 is supplied to the front chamber via the first flow path 601, and thus, the second injection unit 500 is pushed forward. The second injection unit 500 moves forward, and thus, the nozzle 520 is pressed to the stationary mold 11. The front chamber functions as a pressure chamber which generates the nozzle touch pressure of the nozzle 520 by the pressure of the working liquid supplied from the hydraulic pump 610.

Meanwhile, the rear chamber of the hydraulic cylinder 630 is connected to the second port 612 of the hydraulic pump 610 via a second flow path 602. The working liquid discharged from the second port 612 is supplied to the rear chamber of the hydraulic cylinder 630 via the second flow path 602, and thus, the second injection unit 500 is pushed rearward. The second injection unit 500 moves rearward and thus, the nozzle 520 is separated from the stationary mold 11.

In addition, in the present embodiment, the second movement unit 600 includes the hydraulic cylinder 630. However, the present invention is not limited to this. For example, instead of the hydraulic cylinder 630, an electric motor and a motion conversion mechanism which converts a rotary motion of the electric motor into a linear motion of the second injection unit 500 may be used.

### <Second Control Unit>

The second control unit 800 controls driving of the additional machine 3, that is, driving of the second injection unit 500, the second movement unit 600, or the like. For example, according to the control signal from the first control unit 700, the second control unit 800 synchronizes the operations of the second injection unit 500 and the second movement unit 600 with the operation of the main machine 2 including the mold clamping unit 100, the ejector unit 200, the first injection unit 300, the first movement unit 400, or the like.

For example, similarly to the first control unit 700, the second control unit 800 includes a computer, and the second control unit 800 includes a Central Processing Unit (CPU) 801, a recording medium 802 such as a memory, an input interface 803, and an output interface 804. The second control unit 800 performs various controls by causing the CPU 801 to execute a program stored in the recording medium 802. In addition, the second control unit 800 receives a signal from the outside through the input interface 803 and transmits a signal to the outside through the output interface 804.

The second control unit 800 performs the plasticizing process, the filling process, the holding pressure process, or the like by the second injection unit 500 between the mold clamping processes.

In addition, in order to shorten the molding cycle time, the plurality of processes may be simultaneously performed. For example, the plasticizing process may be performed during the cooling process of the previous molding cycle, and in this case, the mold closing process may be performed at an initial stage of the molding cycle. In addition, the filling process may start during the mold closing process.

The second control unit 800 is connected to an operation unit 850 or a display unit 860.

The operation unit 850 (an example of a second operation unit) receives an input operation related to the additional machine 3 by a user and outputs a signal corresponding to the input operation to the second control unit 800. In addition, the operation unit 850 receives an input operation related to the main machine 2 and outputs a signal corresponding to the input operation to the second control unit 800.

The display unit 860 (an example of the second display unit) displays an operation screen corresponding to the input operation in the operation unit 850 under the control of the second control unit 800. Specifically, the display unit 860 displays an operation screen related to the additional machine 3 under the control of the second control unit 800. In addition, the display unit 860 may display the operation screen related to the main machine 2 under the control of the second control unit 800. Accordingly, the user can perform the operation related to the main machine 2 on the additional machine 3 side. Therefore, convenience of the user is improved, and it is possible to easily perform the setting operation or the like of the entire injection molding machine 1 including the main machine 2 and the additional machine 3.

The operation screen displayed on the display unit 860 is used for setting or the like related to the additional machine 3 or the main machine 2. For example, similarly the case of the operation screen displayed on the display unit 760, the setting related to the additional machine 3 or the main machine 2 includes setting (specifically, input of a set value) of a molding condition related to the additional machine 3 or the main machine 2. In addition, for example, the setting includes setting related to a selection of a type of detection value of various sensors or the like related to the additional machine 3 or the main machine 2 recorded as logging data during a molding operation. In addition, for example, the setting includes a display specification (for example, a type of the actual value to be displayed or a display method) on the display unit 860 of the detection value (an actual value) of various sensors or the like related to the additional machine 3 or the main machine 2 during the molding operation. A plurality of operation screens are prepared and are switched to be displayed or are displayed in an overlapping manner. The user operates the operation unit 850 while viewing the operation screen displayed on the display unit 860, and thus, can perform the setting (including the input of the set value) or the like related to the additional machine 3. In addition, in a case where the operation screen related to the main machine 2 is displayed on the display unit 860, the user operates the operation unit 850 while viewing the operation screen displayed on the display unit 860, and thus, can perform the setting or the like of the main machine 2. Details of the operation screen displayed on the display unit 860 will be described later (see Figs. 3A to 3C, Fig. 4, and Fig. 5).

In addition, the display unit 860 displays various information (information screen) corresponding to the operation on the operation screen under the control of the second control unit 800. A plurality of information screens are prepared, and are switched to the display unit 860 to be displayed or are displayed in an overlapping manner. For example, the display unit 860 displays a setting content (for example, a setting content related to the molding condition of the additional machine 3) or management information (for example, information about operation results of the additional machine 3 or the like) related to the additional machine 3. Moreover, the display unit 860 displays a setting content (for example, a setting content related to the molding condition of the main machine 2) or management information (for example, information related to an operation result of the main machine 2) related to the main machine 2, under the control of the second control unit 800. In this case, the setting content related to the main machine 2 displayed on the display unit 860 may be reference information of the operation screen related to the setting of the main machine 2. As a result, the user can perform the setting related to the additional machine 3 so as to correspond to the setting content related to the main machine 2 while confirming the setting content related to the mainmachine 2. In addition, the user can confirmboth management information related to the main machine 2 and the additional machine 3 on the additional machine 3 side, and thus, it is possible to easily determine a quality control or the like of the entire injection molding machine 1. Thus, the convenience of the user is improved. In this case, various information (the setting content or the management information related to the main machine 2) related to the main machine 2 displayed on the display unit 860 may have the same configuration as the information related to the additional machine 3 or a configuration different from the information. For example, the various information related to the main machine 2 displayed on the display unit 860 may be summary information of a predetermined method, or may be constituted by only information selected and set by a predetermined operation screen or the like in advance. Accordingly, the user can display only necessary information on the display unit 860. In addition, in the information screen corresponding to various information related to the main machine 2 displayed on the display unit 860, the user can select or change a display order or a size of a frame such as a window by the operation unit 850 through a predetermined operation screen or the like. As a result, the user can customize a display specification of the information screen displayed on the display unit 860 according to his/her preference, and thus, the convenience of the user is improved. In addition, the various information related to the main machine 2 may be displayed on the display unit 860 as a pair of pieces of information along with corresponding information related to the additional machine 3. As a result, for example, the user can perform the setting operation of the molding condition of the additional machine 3 while confirming the setting content of the molding condition of the main machine 2, and thus, the convenience of the user is improved.

For example, the operation unit 850 and the display unit 860 may be constituted by a touch panel type display and may be integrated with each other.

In addition, in the present embodiment, the operation unit 850 and the display unit 860 are integrated with each other. However, the operation unit 850 and the display unit 860 may be provided independently. In addition, a plurality of the operation units 850 may be provided.

In a case where the operation of the operation unit 850 is performed, the second control unit 800 transmits a signal (an example of a second signal; hereinafter, referred to as a "signal during operating the additional machine") indicating that the operation is performed on the additional machine 3 side, to the first control unit 700. As a result, the second control unit 800 can prompt the first control unit 700 such that the first control unit 700 does not accept the operation (that is, the operation of the operation unit 750) on the main machine 2 side. Therefore, similarly to the case of the first control unit 700, the second control unit 800 is in cooperation with the first control unit 700, and it is possible to prevent the operation from being simultaneously performed on the main machine 2 side and the additional machine 3 side. Details of this function of the second control unit 800 will be described later (refer to Fig. 4 and Fig. 5).

In addition, the second control unit 800 prohibits the molding operation performed by the injection molding machine 1 including the main machine 2 and the additional machine 3 unless the settings of the molding conditions of both the main machine 2 and the additional machine 3 are completed. As a result, even when an initial set value is input to the set value as the molding condition in advance and the setting related to the molding condition is in the middle, there is a possibility that the molding operation is started according to the predetermined operation on the additional machine 3 side. Accordingly, similarly to the case of the first control unit 700, the second control unit 800 can prevent the molding operation from being started in a state where the setting related to the molding condition is incomplete.

For example, as will be described later (refer to Figs. 3A to 3C), the second control unit 800 determines whether or not the molding condition related to the additional machine 3 is completed according to whether or not an operation target (completion button), which is provided on the operation screen related to the setting of the molding condition and notifies that the setting of the molding condition related to the additional machine 3 is completed, is operated. In addition, in a case where after the operation screen related to the setting of the molding condition of the additional machine 3 is displayed, a predetermined time or more sufficiently longer than a time necessary for setting the molding condition elapses, the second control unit 800 may determine that the setting of the molding condition related to the additional machine 3 is completed. Moreover, in a case where after the operation screen related to the setting of the molding condition of the additional machine 3 is displayed, a non-operation state is maintained for a predetermined time or more, the second control unit 800 may determine that the setting of the molding condition related to the additional machine 3 is completed. Moreover, in a case where the operation screen related to the setting of the main machine 2 is displayed on the display unit 860, according to a method similar to the above-described method of determining whether or not the setting of the molding condition related to the additional machine 3 is completed, the second control unit 800 may determine whether or not the setting of the molding condition related to the main machine 2 is completed.

The first control unit 700 and the second control unit 800 mutually transmit or receive information related to whether or not the setting of the molding condition of each of the main machine 2 and the additional machine 3 is completed and share the information. Accordingly, the first control unit 700 and the second control unit 800 cooperate with each other such that the molding operation by the injection molding machine 1 including the main machine 2 and the additional machine 3 is not performed unless the settings of the molding conditions of both the main machine 2 and the additional machine 3 are completed.

### [Operation Screen Related to Molding Condition]

Next, a specific example of the operation screen related to the molding conditions displayed on the display units 760 and 860 will be described with reference to Figs. 3A to 3C.

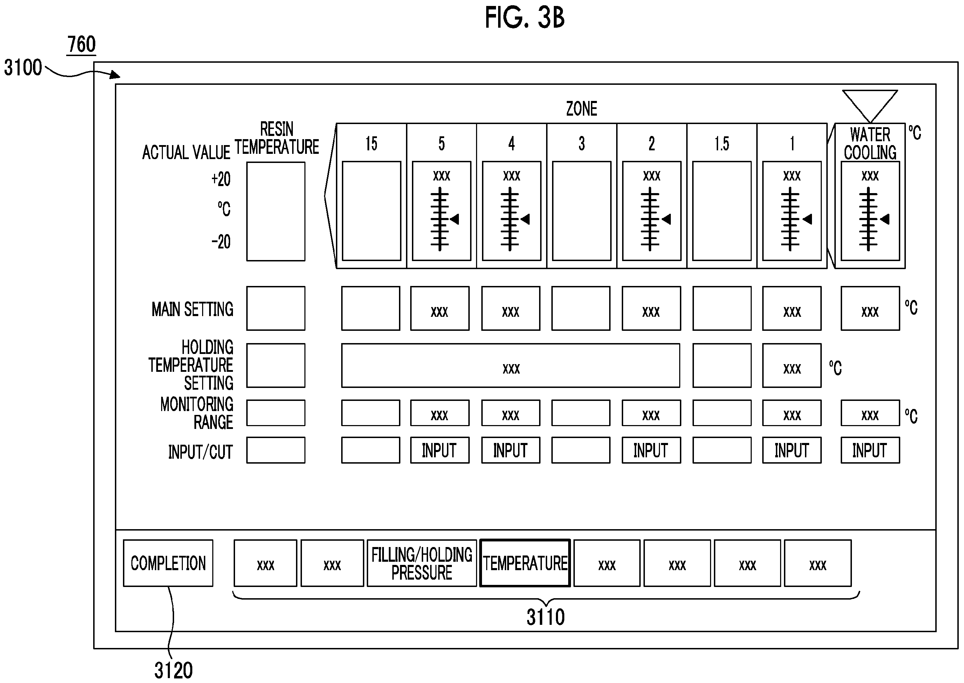

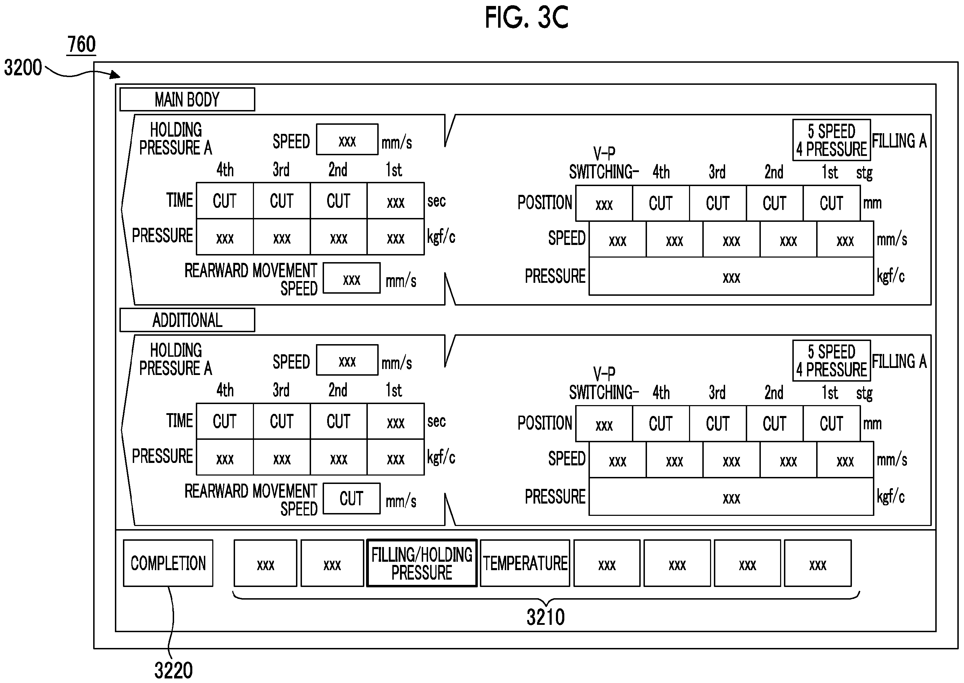

Fig. 3A is a diagram showing an example (operation screen 3000) of an operation screen displayed on the display unit 760, and specifically, is a diagram showing an operation screen (hereinafter, referred to as a "filling/holding pressure setting screen") for performing various settings related to the filling process and the holding pressure process of the first injection unit 300. In addition, Fig. 3B is a diagram showing another example (operation screen 3100) of the operation screen displayed on the display unit 760, and specifically, is a diagram showing an example of an operation screen (hereinafter, referred to as a "temperature setting screen") for performing a temperature setting for each zone related to the heating of the molding material in the cylinder 310 of the first injection unit 300. Fig. 3C is a diagram showing still another example (operation screen 3200) of the operation screen displayed on the display unit 760, and specifically, is a diagram showing an example of the filling/holding pressure setting screen related to both the first injection unit 300 and the second injection unit 500.

As shown in Fig. 3A, in the operation screen 3000, a step-by-step forward movement speed of the screw 330 in the filling process of the main machine 2 (first injection unit 300), the V/P switching position, a step-by-step holding pressure in the holding pressure process, or the like is set by the operation unit 750.

In addition, as shown in Fig. 3B, in the operation screen 3100, the temperature for each zone in the cylinder 310 is set by the operation unit 750.

In lower end portions of the operation screens 3000 and 3100, icon groups 3010 and 3110 indicating a type of molding condition of the setting operation target, and completion button icons 3020 and 3120 performing an operation of notifying of a competition of the setting related to the molding condition of the main machine 2 are displayed.

Similarly, also in the display unit 860 of the additional machine 3, the operation screen similar to the operation screens 3000 and 3100, that is, the aspect similar to that of Figs. 3A and 3B is displayed on the filling/holding pressure setting screen or the temperature setting screen of the second injection unit 500.

When the injection molding machine 1 starts, the first control unit 700 sets the setting related to the molding condition of the main machine 2 to an incomplete state (for example, performs a transition to a main machine setting incompletion mode corresponding to a state where the setting related to the molding condition of the main machine 2 is incomplete). In addition, every time the operation screen related to the setting of the molding condition of the main machine 2 is displayed, the first control unit 700 sets the setting related to the molding condition of the main machine 2 to the incomplete state. In addition, in a case where the completion button icon 3020 is operated by the operation unit 750, the first control unit 700 determines that the operation related to the molding condition of the main machine 2 is completed and sets the molding condition of the main machine 2 to a complete state (for example, performs a transition to a main machine setting completion mode corresponding to a state where the setting related to the molding condition of the main machine 2 is completed).

Similarly, when the injection molding machine 1 starts, the second control unit 800 sets the setting related to the molding condition of the additional machine 3 to an incomplete state (for example, performs a transition to an additional machine setting incompletion mode corresponding to a state where the setting related to the molding condition of the additional machine 3 is incomplete). In addition, every time the operation screen related to the setting of the molding condition of the additional machine 3 is displayed, the second control unit 800 sets the setting related to the molding condition of the additional machine 3 to the incomplete state. In addition, in a case where the completion button icon is operated by the operation unit 850, the second control unit 800 determines that the operation related to the molding condition of the additional machine 3 is completed and set the molding condition of the additional machine 3 to the complete state (for example, performs a transition to an additional machine setting completion mode corresponding to a state where the setting related to the molding condition of the additional machine 3 is completed).

The first control unit 700 and the second control unit 800 always shares mutually the information related to whether or not the setting of the molding condition of each of the main machine 2 and the additional machine 3 is completed (for example, information related to the main machine setting completion mode/incompletion mode or information related to the additional machine setting completion mode/incompletion mode). Accordingly, as described above, the first control unit 700 and the second control unit 800 can prohibit the molding operation performed by the injection molding machine 1 including the main machine 2 and the additional machine 3 unless the settings of the molding conditions of both the main machine 2 and the additional machine 3 are completed.

In addition, as shown in Fig. 3C, in the operation screen 3200, the step-by-step forward movement speeds of the screws 330 and 530 in the filling processes of the main machine 2 (first injection unit 300) and the additional machine 3 (second injection unit 500), the V/P switching positions, the step-by-step holding pressures in the holding pressure processes, or the like are set by the operation unit 750 of the main machine 2. That is, in the present example, not only the setting operation of the molding condition related to the main machine 2 but also the setting operation of the molding condition related to the additional machine 3 can be performed on the main machine 2 side (operation unit 750 and display unit 760). Thereby, as described above, the convenience of the user is improved.

In lower end portion of the operation screens 3200, icon groups 3210 indicating a type of molding condition of the setting operation target, and completion button icons 3020 performing the operations of notifying of the competitions of the settings related to the molding conditions of the main machine 2 and the additional machine 3 are displayed.

Similarly, also in the display unit 860 of the additional machine 3, the operation screen similar to the operation screen 3200, that is, the aspect similar to that of Figs. 3C is displayed on the filling/holding pressure setting screens of both the first injection unit 300 and the second injection unit 500.

When the injection molding machine 1 starts, the first control unit 700 and the second control unit 800 set the setting related to the molding conditions of the main machine 2 and the additional machine 3, that is, the molding condition of the entire injection molding machine 1 to the incomplete states (for example, perform a transition to the entire setting incompletion mode corresponding to a state where the setting related to the molding condition of the entire injection molding machine 1 is incomplete) . In addition, every time the operation screens related to the settings of the molding conditions of both the main machine 2 and the additional machine 3 are displayed, the first control unit 700 and the second control unit 800 set the setting related to the molding condition of the entire injection molding machine 1 to the incomplete state. In addition, in a case where the completion button icons are operated by the operation units 750 and 850, the first control unit 700 and the second control unit 800 determine that the operation related to the molding condition of the entire injection molding machine 1 is completed and set the molding condition of the entire injection molding machine 1 to the complete state (for example, perform a transition to the entire setting completion mode corresponding to a state where the setting related to the molding condition of the entire injection molding machine 1 is completed).

The first control unit 700 and the second control unit 800 always shares mutually the information related to whether or not the setting of the molding condition of the entire injection molding machine 1 is completed (for example, information related to the entire setting completion mode/incompletion mode). Accordingly, as described above, the first control unit 700 and the second control unit 800 can prohibit the molding operation performed by the injection molding machine 1 including the main machine 2 and the additional machine 3 unless the setting of the injection molding machine 1, that is, the settings of the molding conditions of both the main machine 2 and the additional machine 3 are completed.

### [Details of Simultaneous Operation Suppression Function]

Next, details of the simultaneous operation suppression functions by the first control unit 700 and the second control unit 800 will be described with reference to Figs. 4 and 5.

Fig. 4 is a diagram showing an example of the operation screen on the additional machine 3 side (display unit 860) in a case where an operation is performed on the main machine 2 side (operation unit 750 and display unit 760). Fig. 5 is a diagram showing another example of the operation screen on the additional machine 3 side (display unit 860) in the case where the operation is performed on the main machine 2 side (operation unit 750 and display unit 760).

In a case where the setting operation related to the molding condition is performed (is started) by the operation unit 750 in a state where the first control unit 700 does not receive a signal during the additional machine operation from the second control unit 800, the first control unit 700 transmits a signal during the main machine operation to the second control unit 800 and gives an authority of the setting operation related to the molding condition to the main machine 2 side (operation unit 750 and display unit 760). For example, the first control unit 700 performs a transition to a settable mode in which the setting operation related to the molding condition is possible.

In this case, for example, whether or not the setting operation related to the molding condition starts may be determined according to whether or not a predetermined operation target (for example, a button icon or the like notifying of a setting start) displayed on the operation screen related to the molding condition is operated. In addition, for example, the determination may be performed according to whether or not an operation (for example, an operation of a predetermined icon, a predetermined tab, or the like) for the displaying the operation screen related to the molding condition is performed. Moreover, for example, the determination may be performed according to presence or absence of a movement of a cursor to an input field in which a set value or the like is actually input into the operation screen related to the molding condition. A determination on the additional machine 3 side by the second control unit 800 described later may be similarly performed.

Meanwhile, in a case where the second control unit 800 receives the signal during the main machine operation from the first control unit 700, the second control unit 800 changes the display on the operation screen of the setting related to the molding condition such that the operation related to the molding condition on the additional machine 3 side (operation unit 850 and display unit 860) is not performed.

For example, as shown in Fig. 4, the second control unit 800 causes character information indicating that the setting related to the molding condition is in operation to be displayed on the main machine 2 side such that the character information is superimposed on the operation screen (in the present embodiment, the filling/holding pressure setting screen) related to the molding condition of the additional machine 3 (second injection unit 500) of the display unit 860. Accordingly, it is possible to urge the user who is trying to set the molding condition on the additional machine 3 side not to perform the setting operation of the molding condition on the additional machine 3 side.

In addition, for example, as shown in Fig. 5, the second control unit 800 grays out the operation screen (in the present example, the filling/holding pressure setting screen) of the setting related to the molding condition of the additional machine 3 (second injection unit 500) of the display unit 860 such that the operation by the operation unit 850 cannot be performed. Accordingly, the setting operation of the molding condition on the additional machine 3 side cannot be reliably performed.

In addition, in a state where the authority related to the setting operation related to the molding condition is given to the main machine 2 side, the second control unit 800 may transmit a signal (hereinafter, referred to as an "authority request signal") of requesting a transfer of the authority to the first control unit 700 according to a predetermined operation performed by the operation unit 850. In this case, information indicating that the authority request signal is received may be displayed on the operation screen of the main machine 2 side (display unit 760) which receives the authority request signal, and an operation screen of confirming a permission to transfer the authority to the additional machine 3 side may be displayed. Moreover, in a case where the first control unit 700 performs the operation of permitting the transfer of the authority to the additional machine 3 side by the operation unit 750, the first control unit 700 cancels the authority of the main machine 2 and transmits a signal (an authority transfer signal) indicating that the authority is transferred, to the second control unit 800 to the second control unit 800. Accordingly, if the user on the main machine 2 side is permitted, the user on the additional machine 3 side can perform the setting operation related to the molding condition. Therefore, for example, while communication between the user who operates the main machine 2 side and the user who operates the additional machine 3 side can be performed on the operation screen, the setting operation related to the molding condition can be advanced, and thus, the convenience of the user is improved.

Conversely, in a case where the operation related to the molding condition is performed (is started) by the operation unit 850 in a state where the second control unit 800 does not receive the signal during the main machine operation from the first control unit 700, the second control unit 800 transmits the signal during the additional machine operation to the first control unit 700 and gives the authority of the setting operation related to the molding condition to the additional machine 3 side (operation unit 850 and display unit 860). For example, similarly to the case of the first control unit 700, the second control unit 800 performs a transition to the settable mode in which the setting operation related to the molding condition is possible.

Meanwhile, in a case where the first control unit 700 receives the signal during the additional machine operation from the second control unit 800, similarly to the case of the second control unit 800, the first control unit 700 changes the display on the operation screen of the setting related to the molding condition such that the operation related to the molding condition on the main machine 2 side (operation unit 750 and display unit 760) is not performed.

For example, similarly to Fig. 4, the first control unit 700 may cause character information indicating that the setting related to the molding condition is in operation to be displayed on the additional machine 3 side such that the character information is superimposed on the setting screen related to the molding condition of the main machine 2 (first injection unit 300) of the display unit 760, or similarly to Fig. 5, the first control unit 700 may gray out the operation screen such that the operation by the operation unit 750 cannot be performed. Accordingly, the same operation and effect as described above are exerted.

Moreover, similarly to the case of the second control unit 800, in a state where the authority related to the setting operation related to the molding condition is given to the additional machine 3 side, the first control unit 700 may transmit the authority request signal to the second control unit 800 according to a predetermined operation performed by the operation unit 750. In this case, information indicating that the authority request signal is received may be displayed on the operation screen of the additional machine 3 side (display unit 860) which receives the authority request signal, and an operation screen of confirming a permission to transfer the authority to the main machine 2 side may be displayed. Moreover, in a case where the second control unit 800 performs the operation of permitting the transfer of the authority to the main machine 2 side by the operation unit 850, the second control unit 800 cancels the authority of the additional machine 3 and transmits the authority transfer signal to the first control unit 700. Accordingly, if the user on the additional machine 3 side is permitted, the user on the main machine 2 side can perform the setting operation related to the molding condition, and the same operation and effect as described above are exerted.

### [Operation]

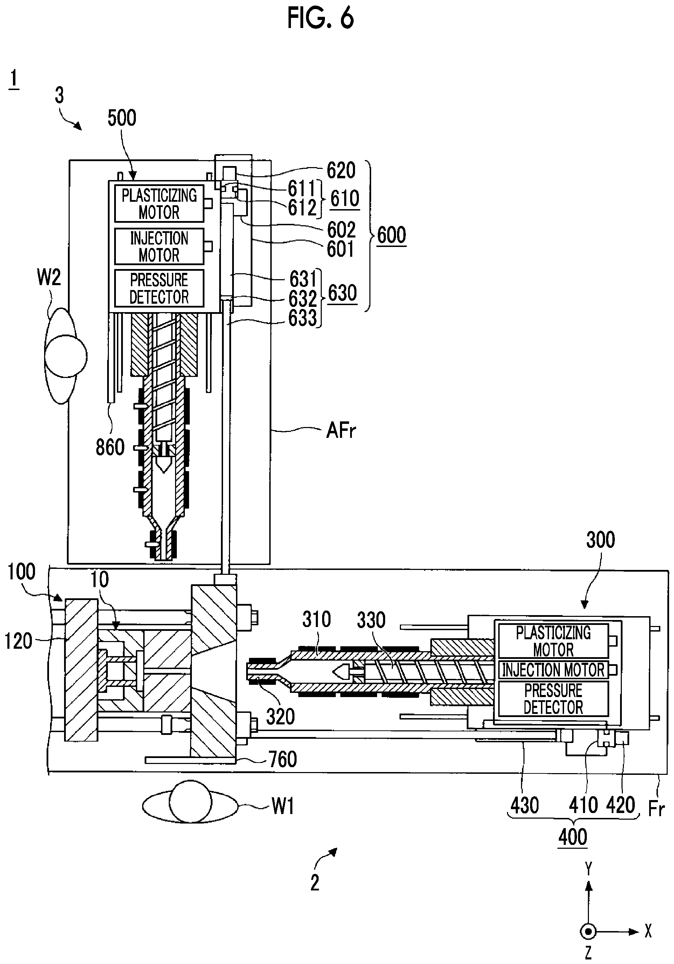

Next, an operation of the injection molding machine according to the present embodiment will be described with reference to Fig. 6.

Fig. 6 is a view showing the operation of the injection molding machine 1 according to the present embodiment. Specifically, Fig. 6 is a view showing an example of dispositions of the display unit 760 on the main machine 2 side and the display unit 860 on the additional machine 3 side.

As shown in Fig. 6, in the present example, a user W1 who stands in front of the display unit 760 and a user W2 who stands in front of the display unit 860 are hindered by the mold clamping unit 100 or the like, and there is a possibility that the users W1 and W2 cannot confirm the other party. Therefore, depending on a disposition state of the display unit 760 and the display unit 860, there may be a situation where it is difficult for a user to confirm whether or not the operation on the other side of the main machine 2 side and the additional machine 3 side is performed.

In addition, in addition to the situation shown in Fig. 6, in a case where the injection molding machine 1 is a large machine, relative positions of the display units 760 and 860 on the main machine 2 side and additional machine 3 side may be separated from each other to such an extent that confirmation cannot be made between users who operate both the main machine 2 and the additional machine 3.

Therefore, the communication between the user operating the main machine 2 side and the user operating the additional machine 3 side cannot be performed, and there is a possibility that both the main machine 2 and the additional machine 3 may be simultaneously operated.

Meanwhile, if the operations are performed on the main machine 2 side and the additional machine 3 side, any one of the main machine 2 side (first control unit 700) and the additional machine 3 side (second control unit 800) transmits the signals (the signal during the main body-side operation, the signal during the additional machine-side operation) indicating that the operations are performed on the main machine 2 side and the additional machine 3 side to the other side. Accordingly, as described above, one, which receives the signal, of the main machine 2 side and the additional machine 3 side can notify the user of the operation being performed on the other side on the operation screen, or can prohibit the operation itself. Therefore, the injection molding machine 1 according to the present embodiment can prevent the operations from being simultaneously performed on both the main machine 2 side and the additional machine 3 side.

### [Modification And Improvement]

Hereinbefore, the embodiment of the injection molding machine 1 or the like is described. However, the present invention is not limited to the above-described embodiment or the like, and various modifications and improvements can be made within the scope of the present invention described in claims.

For example, in the above-described embodiment, in the case where the operation screen of the display unit 760 of the main machine 2 is operated, the information indicating that the operation screen of the display unit 760 of the main machine 2 is in operation is displayed on the operation screen of the display unit 860 of the additional machine 3, and in the case where the operation screen of the display unit 860 of the additional machine 3 is operated, the information indicating that the operation screen of the display unit 860 of the additional machine 3 is in operation is displayed on the operation screen of the display unit 760 of the main machine 2 (refer to Fig. 4). However, the present invention is not limited to the aspect. Specifically, in a case where the operation by the operation unit 750 of the main machine 2 is performed regardless of whether or not the operation screen is operated, optional notification means (for example, an audio output device or the like such as a speaker or a buzzer in addition to the display unit 860) of the additional machine 3 may notify the user of the operation being performed by the operation unit 750 of the main machine 2, and in a case where the operation by the operation unit 850 of the additional machine 3 is performed, optional notification means (for example, an audio output device or the like such as a speaker or a buzzer in addition to the display unit 760) of the main machine 2 may notify the user of the operation being performed by the operation unit 850 of the additional machine 3.

In addition, in the above-described embodiment, in the case where the operation screen of the display unit 760 of the main machine 2 is operated, the operation screen of the display unit 860 of the additional machine 3 cannot be operated, and in the case where the operation screen of the display unit 860 of the additional machine 3 is operated, the operation screen of the display unit 760 of the main machine 2 cannot be operated. However, the present invention is not limited to the aspect. Specifically, in a case where the operation by the operation unit 750 of the main machine 2 is performed regardless of whether or not the operation screen is operated, the operation by the operation unit 850 of the additional machine 3 may not be performed (that is, operation prohibition), and in a case where the operation by the operation unit 850 of the additional machine 3 is performed, the operation by the operation unit 750 of the main machine 2 may not be performed (that is, operation prohibition).

Moreover, in the above-described embodiment and modification example, the injection molding machine 1 includes two injection units such as the first injection unit 300 and the second injection unit 500. However, the injection molding machine 1 may have three or more injection units. In this case, in a case where an operation corresponding to one injection unit is performed, a control unit corresponding to the one injection unit may transmit a signal indicating that the operation is performed to all control units corresponding to injection units except for the one injection unit. Accordingly, the same operation and effect as described above are exerted.

### Brief Description of the Reference Symbols

- 1:: injection molding machine
- 2:: main machine (molding machine main body)
- 3:: additional machine
- 10:: mold unit
- 14:: cavity space
- 300:: first injection unit
- 320:: nozzle
- 400:: first movement unit
- 500:: second injection unit
- 520:: nozzle
- 600:: second movement unit
- 700:: first control unit
- 750:: operation unit (first operation unit)
- 760:: display unit (notification means, first display unit)
- 800:: second control unit
- 850:: operation unit (second operation unit)
- 860:: display unit (notification means, second display unit)

## Claims

1. An injection molding machine (1) comprising:
a molding machine main body (2) which includes a first injection unit (300);
a second injection unit (500);
a first control unit (700) which is configured to control the molding machine main body (2);
a second control unit (800) which is communicably connected to the first control unit (700) and configured to control the second injection unit (500);
a first operation unit (750) which is connected to the first control unit (700) and configured to receive an input operation related to at least the molding machine main body (2) from among the molding machine main body (2) and the second injection unit (500); and
a second operation unit (850) which is connected to the second control unit (800) and configured to receive an input operation related to at least the second injection unit (500) from among the molding machine main body (2) and the second injection unit (500),
**characterized in that** the first control unit (700) is configured to transmit a first signal indicating that the first operation unit (750) is operated, to the second control unit (800), in a case where the first operation unit (750) is operated by a user, and
the second control unit (800) is configured to transmit a second signal indicating that the second operation unit (850) is operated, to the first control unit (700), in a case where the second operation unit (850) is operated by the user.

2. The injection molding machine according to claim 1,
wherein the first control unit (700) is configured to transmit the first signal to the second control unit (800), in a case where the user performs an operation related to setting of the molding machine main body (2) or the second injection unit (500) by the first operation unit (750), and
wherein the second control unit (800) is configured to transmit the second signal to the first control unit (700), in a case where the user performs the operation related to the setting of the molding machine main body (2) or the second injection unit (500) by the second operation unit (850).

3. The injection molding machine according to claim 1 or 2,
wherein the first control unit (700) is configured to cause predetermined notification means to notify the user of the second operation unit (850) being operated, in a case where the first control unit (700) receives the second signal from the second control unit (800), and
wherein the second control unit (800) is configured to cause predetermined notification means to notify the user of the first operation unit (750) being operated, in a case where the second controlunit (800) receives the first signal from the first control unit (700) .

4. The injection molding machine according to claim 3, further comprising:
a first display unit (760) which is connected to the first control unit (700) and configured to display an operation screen on which the operation of the first operation unit (750) is performed; and
a second display unit (860) which is connected to the second control unit (800) and configured to display an operation screen on which the operation of the second operation unit (850) is performed,
wherein the first control unit (700) is configured to cause information indicating that the operation screen of the second display unit (860) is in operation to be displayed on the operation screen of the first display unit (760), in a case where the first control unit (700) receives the second signal from the second control unit (800), and
wherein the second control unit (800) is configured to cause information indicating that the operation screen of the first displayunit (760) is in operation to be displayed on the operation screen of the second display unit (860), in a case where the second control unit (800) receives the first signal from the first control unit (700).

5. The injection molding machine according to claim 1 or 2,
wherein the first control unit (700) is configured to cause the first operation unit (750) not to be operated, in a case where the first control unit (700) receives the second signal from the second control unit (800), and
wherein the second control unit (800) is configured to cause the second operation unit (860) not to be operated, in a case where the second control unit (800) receives the first signal from the first control unit (700).

6. The injection molding machine according to claim 5, further comprising:
a first display unit (760) which is connected to the first control unit (700) and configured to display an operation screen on which the operation of the first operation unit (750) is performed; and
a second display unit (860) which is connected to the second control unit (800) and configured to display an operation screen on which the operation of the second operation unit (850) is performed,
wherein the first control unit (700) is configured to cause the operation screen of the first display unit (760) not to be operated, in a case where the first control unit (700) receives the second signal from the second control unit (800), and
wherein the second control unit (800) is configured to cause the operation screen of the second display unit (860) not to be operated, in a case where the second control unit (800) receives the first signal from the first control unit (700).

## Patentansprüche

1. Spritzgießmaschine (1), umfassend:
einen Formmaschinen-Hauptkörper (2), der eine erste Einspritzeinheit (300) umfasst,
eine zweite Einspritzeinheit (500),
eine erste Steuereinheit (700), die konfiguriert ist, den Formmaschinen-Hauptkörper (2) zu steuern,
eine zweite Steuereinheit (800), die kommunikationsfähig mit der ersten Steuereinheit (700) verbunden und konfiguriert ist, die zweite Einspritzeinheit (500) zu steuern,
eine erste Bedienungseinheit (750), die mit der ersten Steuereinheit (700) verbunden und konfiguriert ist, eine Eingabebedienung in Bezug auf zumindest den Formmaschinen-Hauptkörper (2) aus dem Formmaschinen-Hauptkörper (2) und der zweiten Einspritzeinheit (500) zu empfangen, und
eine zweite Bedienungseinheit (850), die mit der zweiten Steuereinheit (800) verbunden und konfiguriert ist, eine Eingabebedienung in Bezug auf zumindest die zweite Einspritzeinheit (500) aus dem Formmaschinen-Hauptkörper (2) und der zweiten Einspritzeinheit (500) zu empfangen,
**dadurch gekennzeichnet, dass** die erste Steuereinheit (700) konfiguriert ist, in einem Fall, in dem die erste Bedienungseinheit (750) durch einen Benutzer bedient wird, ein erstes Signal, das anzeigt, dass die erste Bedienungseinheit (750) bedient wird, an die zweite Steuereinheit (800) zu übermitteln, und
die zweite Steuereinheit (800) konfiguriert ist, in einem Fall, in dem die zweite Bedienungseinheit (850) durch den Benutzer bedient wird, ein zweites Signal, das anzeigt, dass die zweite Bedienungseinheit (850) bedient wird, an die erste Steuereinheit (700) zu übermitteln.

2. Spritzgießmaschine nach Anspruch 1,
wobei die erste Steuereinheit (700) konfiguriert ist, in einem Fall, in dem der Benutzer eine Bedienung in Bezug auf eine Einstellung des Formmaschinen-Hauptkörpers (2) oder der zweiten Einspritzeinheit (500) durch die erste Bedienungseinheit (750) durchführt, das erste Signal an die zweite Steuereinheit (800) zu übermitteln, und
wobei die zweite Steuereinheit (800) konfiguriert ist, in einem Fall, in dem der Benutzer die Bedienung in Bezug auf eine Einstellung des Formmaschinen-Hauptkörpers (2) oder der zweiten Einspritzeinheit (500) durch die zweite Bedienungseinheit (850) durchführt, das zweite Signal an die erste Steuereinheit (700) zu übermitteln.

3. Spritzgießmaschine nach Anspruch 1 oder 2,
wobei die erste Steuereinheit (700) konfiguriert ist, in einem Fall, in dem die erste Steuereinheit (700) das zweite Signal von der zweiten Steuereinheit (800) empfängt, zu bewirken, dass vorbestimmte Benachrichtigungsmittel den Benutzer benachrichtigen, dass die zweite Bedienungseinheit (850) bedient wird, und
wobei die zweite Steuereinheit (800) konfiguriert ist, in einem Fall, in dem die zweite Steuereinheit (800) das erste Signal von der ersten Steuereinheit (700) empfängt, zu bewirken, dass vorbestimmte Benachrichtigungsmittel den Benutzer benachrichtigen, dass die erste Bedienungseinheit (750) bedient wird.

4. Spritzgießmaschine nach Anspruch 3, ferner umfassend:
eine erste Anzeigeeinheit (760), die mit der ersten Steuereinheit (700) verbunden und konfiguriert ist, einen Bedienungsbildschirm anzuzeigen, auf dem die Bedienung der ersten Bedienungseinheit (750) durchgeführt wird, und
eine zweite Anzeigeeinheit (860), die mit der zweiten Steuereinheit (800) verbunden und konfiguriert ist, einen Bedienungsbildschirm anzuzeigen, auf dem die Bedienung der zweiten Bedienungseinheit (850) durchgeführt wird,
wobei die erste Steuereinheit (700) konfiguriert ist, in einem Fall, in dem die erste Steuereinheit (700) das zweite Signal von der zweiten Steuereinheit (800) empfängt, zu bewirken, dass Informationen, die anzeigen, dass der Bedienungsbildschirm der zweiten Anzeigeeinheit (860) in Betrieb ist, auf dem Bedienungsbildschirm der ersten Anzeigeeinheit (760) angezeigt werden, und
wobei die zweite Steuereinheit (800) konfiguriert ist, in einem Fall, in dem die zweite Steuereinheit (800) das erste Signal von der ersten Steuereinheit (700) empfängt, zu bewirken, dass Informationen, die anzeigen, dass der Bedienungsbildschirm der ersten Anzeigeeinheit (760) in Betrieb ist, auf dem Bedienungsbildschirm der zweiten Anzeigeeinheit (860) angezeigt werden.

5. Spritzgießmaschine nach Anspruch 1 oder 2,
wobei die erste Steuereinheit (700) konfiguriert ist, in einem Fall, in dem die erste Steuereinheit (700) das zweite Signal von der zweiten Steuereinheit (800) empfängt, zu bewirken, dass die erste Bedienungseinheit (750) nicht bedient wird,
wobei die zweite Steuereinheit (800) konfiguriert ist, in einem Fall, in dem die zweite Steuereinheit (800) das erste Signal von der ersten Steuereinheit (700) empfängt, zu bewirken, dass die zweite Bedienungseinheit (860) nicht bedient wird.

6. Spritzgießmaschine nach Anspruch 5, ferner umfassend:
eine erste Anzeigeeinheit (760), die mit der ersten Steuereinheit (700) verbunden und konfiguriert ist, einen Bedienungsbildschirm anzuzeigen, auf dem die Bedienung der ersten Bedienungseinheit (750) durchgeführt wird, und
eine zweite Anzeigeeinheit (860), die mit der zweiten Steuereinheit (800) verbunden und konfiguriert ist, einen Bedienungsbildschirm anzuzeigen, auf dem die Bedienung der zweiten Bedienungseinheit (850) durchgeführt wird,
wobei die erste Steuereinheit (700) konfiguriert ist, in einem Fall, in dem die erste Steuereinheit (700) das zweite Signal von der zweiten Steuereinheit (800) empfängt, zu bewirken, dass der Bedienungsbildschirm der ersten Anzeigeeinheit (760) nicht bedient wird, und
wobei die zweite Steuereinheit (800) konfiguriert ist, in einem Fall, in dem die zweite Steuereinheit (800) das erste Signal von der ersten Steuereinheit (700) empfängt, zu bewirken, dass der Bedienungsbildschirm der zweiten Anzeigeeinheit (860) nicht bedient wird.

## Revendications

1. Une machine de moulage par injection (1) comprenant :
un corps principal de machine de moulage (2) qui comprend une première unité d'injection (300) ;
une deuxième unité d'injection (500) ;
une première unité de commande (700) qui est configurée pour commander le corps principal de machine de moulage (2) ;
une deuxième unité de commande (800) qui est connectée en communication à la première unité de commande (700) et configurée pour commander la deuxième unité d'injection (500) ;
une première unité opérationnelle (750) qui est connectée à la première unité de commande (700) et configurée pour recevoir une opération d'entrée liée à au moins le corps principal de machine de moulage (2) parmi le corps principal de machine de moulage (2) et la deuxième unité d'injection (500) ; et
une deuxième unité opérationnelle (850) qui est connectée à la deuxième unité de commande (800) et configurée pour recevoir une opération d'entrée liée à au moins la deuxième unité d'injection (500) parmi le corps principal de machine de moulage (2) et la deuxième unité d'injection (500),
**caractérisée en ce que** la première unité de commande (700) est configurée pour transmettre un premier signal indiquant que la première unité opérationnelle (750) est actionnée, à la deuxième unité de commande (800), dans le cas où la première unité opérationnelle (750) est actionnée par un utilisateur, et
la deuxième unité de commande (800) est configurée pour transmettre un deuxième signal indiquant que la deuxième unité opérationnelle (850) est actionnée, à la première unité de commande (700), dans le cas où la deuxième unité opérationnelle (850) est actionnée par l'utilisateur.

2. La machine de moulage par injection selon la revendication 1,
dans laquelle la première unité de commande (700) est configurée pour transmettre le premier signal à la deuxième unité de commande (800), dans le cas où l'utilisateur effectue une opération liée au réglage du corps principal de machine de moulage (2) ou de la deuxième unité d'injection (500) par la première unité opérationnelle (750), et
dans laquelle la deuxième unité de commande (800) est configurée pour transmettre le deuxième signal à la première unité de commande (700), dans le cas où l'utilisateur effectue l'opération liée au réglage du corps principal de machine de moulage (2) ou de la deuxième unité d'injection (500) par la deuxième unité opérationnelle (850).

3. La machine de moulage par injection selon la revendication 1 ou 2,
dans laquelle la première unité de commande (700) est configurée pour amener un moyen de notification prédéterminé à signaler à l'utilisateur que la deuxième unité opérationnelle (850) est actionnée, dans le cas où la première unité de commande (700) reçoit le deuxième signal depuis la deuxième unité de commande (800), et
dans laquelle la deuxième unité de commande (800) est configurée pour amener un moyen de notification prédéterminé à signaler à l'utilisateur que la première unité opérationnelle (750) est actionnée, dans le cas où la deuxième unité de commande (800) reçoit le premier signal depuis la première unité de commande (700).

4. La machine de moulage par injection selon la revendication 3, comprenant en outre :
une première unité d'affichage (760) qui est connectée à la première unité de commande (700) et configurée pour afficher un écran opérationnel sur lequel le fonctionnement de la première unité opérationnelle (750) est effectué ; et
une deuxième unité d'affichage (860) qui est connectée à la deuxième unité de commande (800) et configurée pour afficher un écran opérationnel sur lequel le fonctionnement de la deuxième unité opérationnelle (850) est effectué,
dans laquelle la première unité de commande (700) est configurée pour amener des informations indiquant que l'écran opérationnel de la deuxième unité d'affichage (860) est en fonctionnement à être affichées sur l'écran opérationnel de la première unité d'affichage (760), dans le cas où la première unité de commande (700) reçoit le deuxième signal depuis la deuxième unité de commande (800), et
dans laquelle la deuxième unité de commande (800) est configurée pour amener des informations indiquant que l'écran opérationnel de la première unité d'affichage (760) est en fonctionnement à être affichées sur l'écran opérationnel de la deuxième unité d'affichage (860), dans le cas où la deuxième unité de commande (800) reçoit le premier signal depuis la première unité de commande (700).

5. La machine de moulage par injection selon la revendication 1 ou 2,
dans laquelle la première unité de commande (700) est configurée pour amener la première unité opérationnelle (750) à ne pas être actionnée, dans le cas où la première unité de commande (700) reçoit le deuxième signal depuis la deuxième unité de commande (800), et
dans laquelle la deuxième unité de commande (800) est configurée pour amener la deuxième unité opérationnelle (860) à ne pas être actionnée, dans le cas où la deuxième unité de commande (800) reçoit le premier signal depuis la première unité de commande (700).

6. La machine de moulage par injection selon la revendication 5, comprenant en outre :
une première unité d'affichage (760) qui est connectée à la première unité de commande (700) et configurée pour afficher un écran opérationnel sur lequel le fonctionnement de la première unité opérationnelle (750) est effectué ; et
une deuxième unité d'affichage (860) qui est connectée à la deuxième unité de commande (800) et configurée pour afficher un écran opérationnel sur lequel le fonctionnement de la deuxième unité opérationnelle (850) est effectué,
dans laquelle la première unité de commande (700) est configurée pour amener l'écran opérationnel de la première unité d'affichage (760) à ne pas être actionné, dans le cas où la première unité de commande (700) reçoit le deuxième signal depuis la deuxième unité de commande (800), et
dans laquelle la deuxième unité de commande (800) est configurée pour amener l'écran opérationnel de la deuxième unité d'affichage (860) à ne pas être actionné, dans le cas où la deuxième unité de commande (800) reçoit le premier signal depuis la première unité de commande (700).
